(19) Europäisches Patentamt / European Patent Office / Office européen des brevets

(11) **EP 3 930 131 A1**

(12) **EUROPEAN PATENT APPLICATION**
published in accordance with Art. 153(4) EPC

(43) Date of publication:
**29.12.2021   Bulletin 2021/52**

(21) Application number: **19915630.8**

(22) Date of filing: **22.02.2019**

(51) Int Cl.:
**H02J 1/00** (2006.01)     **H02J 13/00** (2006.01)
**H02M 3/00** (2006.01)     **H02M 3/155** (2006.01)

(86) International application number:
**PCT/JP2019/006924**

(87) International publication number:
**WO 2020/170459 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Hitachi, Ltd.**
  **Tokyo 100-8280 (JP)**
• **IKS Co., Ltd.**
  **Kyoto-shi, Kyoto 604-0845 (JP)**

(72) Inventors:
• **EMURA, Fumitoshi**
  **Tokyo 100-8280 (JP)**

• **TSUKISHIMA, Takahiro**
  **Tokyo 100-8280 (JP)**
• **HIRAOKA, Kouichi**
  **Tokyo 100-8280 (JP)**
• **TAKAYAMA, Mitsumasa**
  **Tokyo 100-8280 (JP)**
• **SASAKI, Kazuhito**
  **Tokyo 100-8280 (JP)**
• **IMAI, Takashi**
  **Kyoto-shi, Kyoto 604-0845 (JP)**

(74) Representative: **MERH-IP Matias Erny Reichl Hoffmann**
**Patentanwälte PartG mbB**
**Paul-Heyse-Strasse 29**
**80336 München (DE)**

(54) **DC ELECTRIC POWER NETWORK SYSTEM, DC/DC CONVERTER DEVICE, AND METHOD FOR CONTROLLING SAME**

(57)     Each DC-DC converter apparatus includes: a converter unit that is composed of one DC-DC converter capable of transferring direct-current power bidirectionally or a plurality of DC-DC converters with their one-side input-output terminals coupled to each other; a voltmeter that measures a voltage of each input-output terminal of the converter unit: and a control unit that controls each of the DC-DC converters of a DC-DC converter unit, wherein the size and direction of output electric power of each DC-DC converter are controlled respectively on the basis of a voltage difference between a target voltage given from a host apparatus (a centralized management apparatus) and a voltage of the relevant input-output terminal measured by the voltmeter with respect to each input-output terminal of the converter unit.

FIG. 4

EP 3 930 131 A1

**Description**

TECHNICAL FIELD

The present invention relates to a direct-current power network system, a DC-DC converter apparatus, and a control method therefor and is suited for application to, for example, a direct-current power network equipped with a plurality of DC/DC (Direct Current / Direct Current) converter apparatuses.

BACKGROUND ART

In recent years, opportunities to connect a plurality of direct-current power flows have been increasing with the spread of renewable energy systems represented by photovoltaic power generation systems and EV's (Electric Vehicles) represented by electric cars. When connecting the plurality of direct-current power flows, a DC-DC converter(s) is/are generally interposed between these flows of the direct-current power in order to absorb an electric potential difference between the connected flows of the direct-current power (for example, see PTL 1). The DC-DC converter is electric equipment for transforming the DC voltage to a DC voltage of a different voltage value and is also widely used in, for example, direct-current power networks and electronic equipment.

Regarding such DC-DC converters, there are: a type capable of increasing or decreasing the voltage of the direct-current power and transferring it only unidirectionally; and a type capable of increasing or decreasing the voltage of the direct-current power and transferring it bidirectionally (bidirectional DC-DC converter). A system equipped with a battery such as an EV system usually uses a bidirectional DC-DC converter as a DC-DC converter for charging and discharging the battery.

CITATION LIST

PATENT LITERATURE

PTL 1: Japanese Patent Application Laid-Open (Kokai) Publication No. 2017-130991

SUMMARY OF THE INVENTION

PROBLEMS TO BE SOLVED BY THE INVENTION

Meanwhile, when a direct-current power network system for supplying the direct-current power to load via a plurality of DC-DC converters, control becomes complicated because it becomes necessary to control all these multiple DC-DC converters, but not only in consideration of a single DC-DC converter. Therefore, a centralized management apparatus such as an EMS (Energy Management System) which centrally manages these multiple DC-DC converters is required separately.

However, when the entire direct-current power network system is to be managed by the centralized management apparatus, the centralized management apparatus needs to sequentially control the individual DC-DC converters within the system on a real-time basis and consider electric power input-output directions for the individual DC-DC converters, so that there have been problems of heavy loads on the centralized management apparatus and cumbersome and complicated control.

Furthermore, if any failure of the centralized management apparatus or any communication disturbance from the centralized management apparatus to each DC-DC converter has occurred, problems of low safety have also occurred, for example, each DC-DC converter cannot be controlled by the centralized management apparatus on a real-time basis and an electric outage may occur.

The present invention has been devised in consideration of the above-described circumstances and aims at proposing a direct-current power network system, a DC-DC converter apparatus, and a control method therefor which are capable of facilitating the control and have high safety.

MEANS TO SOLVE THE PROBLEMS

In order to solve the above-described problems, provided according to the present invention is a direct-current power network system including one or a plurality of DC-DC converter apparatuses provided in a network and a centralized management apparatus for centrally managing each of the DC-DC converter apparatuses in the network, wherein the DC-DC converter apparatus includes: a converter unit that is composed of one DC-DC converter capable of transferring direct-current power bidirectionally or a plurality of DC-DC converters having the same function as that of the DC-DC converter with their one-side input-output terminals coupled to each other; a voltmeter that measures a voltage of each input-output terminal of the converter unit: and a control unit that controls each of the DC-DC converters which constitute the converter unit so that electric power with a constant voltage is input and output from each input-output terminal of the converter unit, wherein the centralized management apparatus designates, for each DC-DC converter apparatus, a target voltage of each input-output terminal of the converter unit for the DC-DC converter apparatus; and wherein the control unit for the DC-DC converter apparatus: calculates a voltage difference between the target voltage of the input-output terminal designated by the centralized management apparatus and a voltage of the input-output terminal measured by the voltmeter with respect to each input-output terminal of the converter unit; and controls a size and direction of output electric power of each DC-DC converter on the basis of the calculated voltage difference of each input-output terminal of the converter unit.

Furthermore, provided according to the present invention is a DC-DC converter apparatus including: a converter unit that is composed of one DC-DC converter capable of transferring direct-current power bidirectionally or a plurality of DC-DC converters having the same function as that of the DC-DC converter with their one-side input-output terminals coupled to each other; a voltmeter that measures a voltage of each input-output terminal of the converter unit: and a control unit that controls each of the DC-DC converters which constitute the converter unit so that electric power with a constant voltage is input and output from each input-output terminal of the converter unit, wherein the control unit: calculates a voltage difference between a target voltage of the input-output terminal designated by a host apparatus and a voltage of the input-output terminal measured by the voltmeter with respect to each input-output terminal of the converter unit; and controls a size and direction of output electric power of each DC-DC converter on the basis of the calculated voltage difference of each input-output terminal of the converter unit.

Furthermore, provided according to the present invention is a DC-DC converter apparatus controlling method for a direct-current power network system including one or a plurality of DC-DC converter apparatuses provided in a network and a centralized management apparatus for centrally managing each of the DC-DC converter apparatuses in the network, wherein the DC-DC converter apparatus includes: a converter unit that is composed of one DC-DC converter capable of transferring direct-current power bidirectionally or a plurality of DC-DC converters having the same function as that of the DC-DC converter with their one-side input-output terminals coupled to each other; a voltmeter that measures a voltage of each input-output terminal of the converter unit: and a control unit that controls each of the DC-DC converters which constitute the converter unit so that electric power with a constant voltage is input and output from each input-output terminal of the converter unit, and wherein the DC-DC converter apparatus controlling method includes: a first step executed by the centralized management apparatus designates, for each DC-DC converter apparatus, a target voltage of each input-output terminal of the converter unit for the DC-DC converter apparatus; and a second step executed by the control unit for the DC-DC converter apparatus calculating a voltage difference between the target voltage of the input-output terminal designated by the centralized management apparatus and a voltage of the input-output terminal measured by the voltmeter with respect to each input-output terminal of the converter unit and controlling a size and direction of output electric power of each DC-DC converter on the basis of the calculated voltage difference of each input-output terminal of the converter unit.

If the direct-current power network system, the DC-DC converter apparatus, and its control method according to the present invention are employed, the host apparatus (the centralized management apparatus) does not have to control the DC-DC converter apparatus(es) on a real-time basis and it is only necessary to designate, for each DC-DC converter apparatus, the target voltage of each input-output terminal of the DC-DC converter unit; and, therefore, it is possible to facilitate the control of the DC-DC converter apparatus(es) by the host apparatus. Furthermore, even if subsequently any fault occurs in the host apparatus or any communication disturbance occurs between the host apparatus and the DC-DC converter apparatus, the DC-DC converter apparatus continues to operate based on the target voltage which is set by the host apparatus; and, therefore, there is no fear that any event which would cause the occurrence of an electric outage due to the DC-DC converter apparatus which does not operate.

ADVANTAGEOUS EFFECTS OF THE INVENTION

The direct-current power network system, the DC-DC converter apparatus, and the control method therefor which are capable of facilitating the control and have high safety can be implemented according to the present invention.

BRIEF DESCRIPTION OF DRAWINGS

Fig. 1 is a block diagram for explaining the principles of a DC-DC converter apparatus according to a first embodiment;
Fig. 2 is a block diagram illustrating an outline configuration of a direct-current power network system according to the first embodiment;

Fig. 3 is a block diagram illustrating the configuration of the DC-DC converter apparatus according to the first embodiment;

Fig. 4 is a flowchart illustrating a processing sequence for control processing executed by a control unit according to the first embodiment;

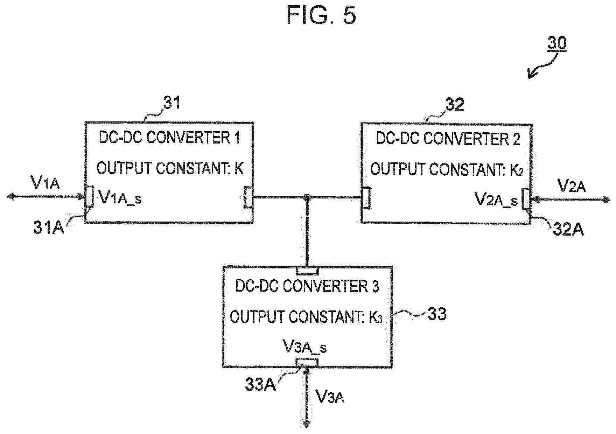

Fig. 5 is a block diagram for explaining the principles of a DC-DC converter apparatus according to a second embodiment;

Fig. 6 is a block diagram illustrating the configuration of the DC-DC converter apparatus according to the second embodiment;

Fig. 7 is a flowchart illustrating a processing sequence for control processing executed by a control unit according to the second embodiment;

Fig. 8 is a flowchart illustrating a processing sequence for control processing executed by the control unit according to the second embodiment; and

Fig. 9 is a block diagram for explaining another embodiment.

DESCRIPTION OF EMBODIMENTS

An embodiment of the present invention will be explained below in detail with reference to the drawings.

(1) First Embodiment

(1-1) Principles

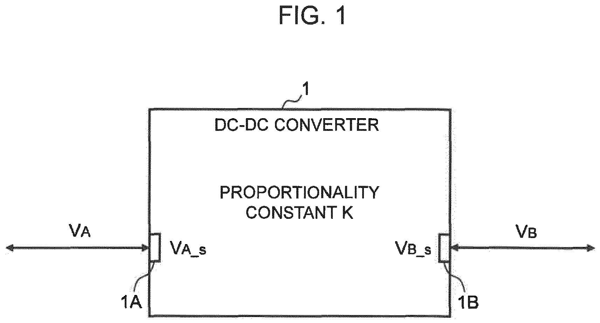

Referring to Fig. 1, with a general-purpose bidirectional DC-DC converter 1 capable of transferring direct-current power bidirectionally, we will discuss a case where a voltage value of one input-output terminal (hereinafter referred to as a "first input-output terminal") 1A side is $V_A$ and a voltage value of the other input-output terminal (hereinafter referred to as a "second input-output terminal") 1B side is $V_B$.

Under this circumstance, it is assumed that the bidirectional DC-DC converter 1 is equipped with a constant voltage function (CV function) that keeps the output voltage constant. Moreover, it is assumed that with the bidirectional DC-DC converter 1, $V_{A\_s}$ is set to the first input-output terminal 1A side and $V_{B\_s}$ is set to the second input-output terminal 1B side as target voltage set values for the CV function (hereinafter referred to as "CV set values").

Under this circumstance, assuming that $\Delta V_A$ represents a voltage difference between the voltage value $V_A$ and the CV set value $V_{A\_s}$ on the first input-output terminal 1A side of the bidirectional DC-DC converter 1, $\Delta V_B$ represents a voltage difference between the voltage value $V_B$ and the CV set value $V_{B\_s}$ on the second input-output terminal 1B side of the bidirectional DC-DC converter 1, K represents an electric power output constant of the bidirectional DC-DC converter 1, and the direction to transfer the electric power from the first input-output terminal 1A side to the second input-output terminal 1B side of the bidirectional DC-DC converter 1 is a positive direction, the electric power P which is output from the bidirectional DC-DC converter 1 can be expressed by the following formula.

[Math. 1]

$$P = K \times (\Delta V_A - \Delta V_B) \qquad \cdots\cdots (1)$$

Incidentally, the voltage difference $\Delta V_A$ in Formula (1) is expressed by the following formula.

[Math. 2]

$$\Delta V_A = V_A - V_{A\_S} \qquad \cdots\cdots (2)$$

The voltage difference $\Delta V_B$ is expressed by the following formula.

[Math. 3]

$$\Delta V_B = V_B - V_{B\_S} \qquad \cdots\cdots (3)$$

As it is apparent from these Formulas (1) to (3), the bidirectional DC-DC converter 1 can control the size and direction of the electric power P by adjusting the sizes of the CV set values $V_{A\_s}$, $V_{B\_s}$ which are set to the first and second input-output terminals 1A, 1B, respectively.

For example, the value of the electric power P which is output to the second input-output terminal 1B side can be increased by decreasing the CV set value $V_{A\_s}$ for the first input-output terminal 1A or increasing the CV set value $V_{B\_s}$ for the second input-output terminal 1B; and contrarily, the value of the electric power P which is output to the second input-output terminal 1B side can be decreased by increasing the CV set value $V_{A\_s}$ for the first input-output terminal 1A or decreasing the CV set value $V_{B\_s}$ for the second input-output terminal 1B.

Moreover, the bidirectional DC-DC converter 1 can be operated to output electric power P from the second input-output terminal 1B side by setting the values of the CV set values $V_{A\_s}$, $V_{B\_s}$ for the first and second input-output terminals 1A, 1B so that the voltage difference $\Delta V_A$ on the first input-output terminal 1A side becomes larger than the voltage difference $\Delta V_B$ on the second input-output terminal 1B side.

Contrarily, the bidirectional DC-DC converter 1 can be operated to output electric power P from the first input-output terminal 1A side by setting the values of the CV set values $V_{A\_s}$, $V_{B\_s}$ for the first and second input-output terminals 1A, 1B so that the voltage difference $\Delta V_A$ on the first input-output terminal 1A side becomes smaller than the voltage difference $\Delta V_B$ on the second input-output terminal 1B side.

A direct-current power network according to this embodiment which employs the above-described bidirectional DC-DC converter controlling method will be explained below.

(1-2) Configuration of Direct-Current Power Network System According to First Embodiment

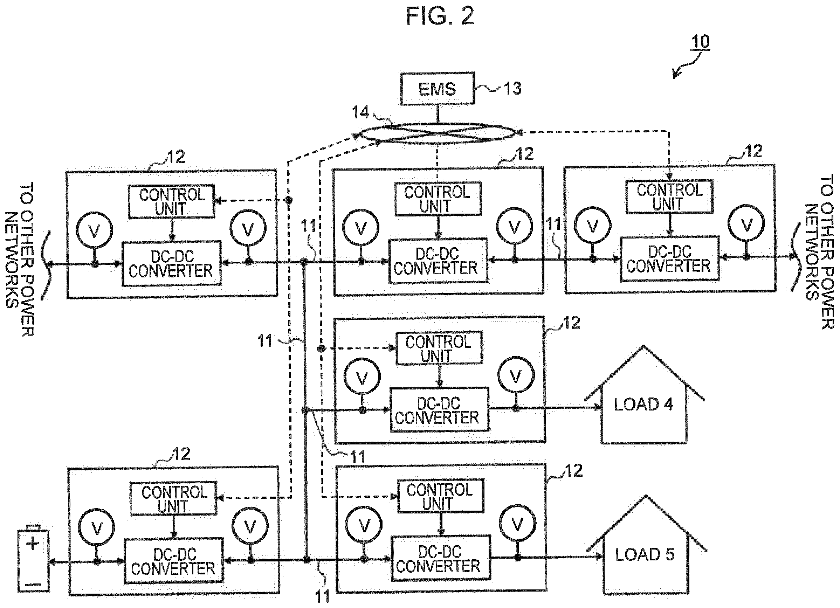

Fig. 2 illustrates a direct-current power network system 10 according to this embodiment. This direct-current power network system 10 is configured such that a plurality of DC-DC converter apparatuses 12, which are connected to each other via an electric power line 11, and an EMS 13, which centrally manages the plurality of DC-DC converter apparatuses 12, are connected to each other via a network 14.

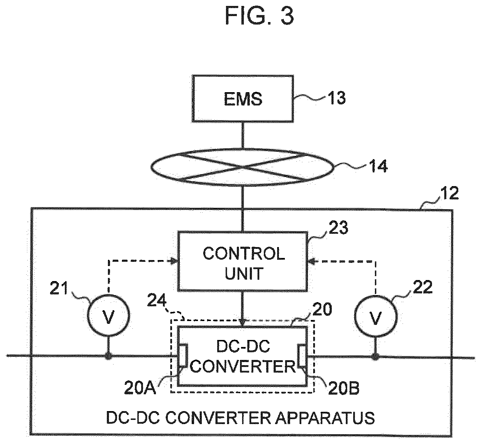

Each DC-DC converter apparatus 12 is configured, as illustrated in Fig. 3, by including a DC-DC converter 20 which constitutes a DC-DC converter unit 24, a first voltmeter 21, a second voltmeter 22, and a control unit 23.

The DC-DC converter 20 is a general-purpose bidirectional DC-DC converter and, under control of the control unit 23, increases or decreases the voltage of the direct-current power on the first input-output terminal 20A side and transfers it to the second input-output terminal 20B side or increases or decreases the voltage of the direct-current power on the second input-output terminal 20B side and transfers it to the first input-output terminal 20A side.

The first voltmeter 21 is a general-purpose voltmeter connected to the first input-output terminal 20A side of the DC-DC converter 20 and measures a voltage of the first input-output terminal 20A side of the DC-DC converter 20 and outputs a measurement result to the control unit 23. Moreover, the second voltmeter 22 is a voltmeter connected to the second input-output terminal 20B side of the DC-DC converter 20 and measures a voltage of the second input-output terminal 20B side of the DC-DC converter 20 and outputs a measurement result to the control unit 23.

The control unit 23 is equipped with a constant current function (CC function) that keeps an output current constant, in addition to the CV function that keeps the output voltage from the DC-DC converter 20 constant. However, the CC function is provided in consideration of the safety of the DC-DC converter and is not an indispensable function in this embodiment.

The control unit 23 controls PWM (Pulse Width Modulation) of the DC-DC converter 20 on the basis of the voltage of the first input-output terminal 20A side of the DC-DC converter 20 measured by the first voltmeter 21, a voltage of the second input-output terminal 20B side of the DC-DC converter 20 measured by the second voltmeter 22, and a control command giveri from the EMS 13 via the network 14.

Practically, in the case of this embodiment, the EMS 13 transmits a control command, which designates the CV set value $V_{A\_s}$ of the first input-output terminal 20A side of the DC-DC converter 20 and the CV set value $V_{B\_s}$ of the second input-output terminal 20B side, and the electric power output constant K respectively, to the control unit 23 as appropriate.

Then, having received this control command, the control unit 23 internally sets the CV set value $V_{A\_s}$ of the first input-output terminal 20A side of the DC-DC converter 20, which is a control target, and the CV set value $V_{B\_s}$ of the second input-output terminal 20B side of the DC-DC converter 20, and the electric power output constant K to values designated by the control command and conducts the PWM control of actions of the DC-DC converter 20 on the basis of these internally set values.

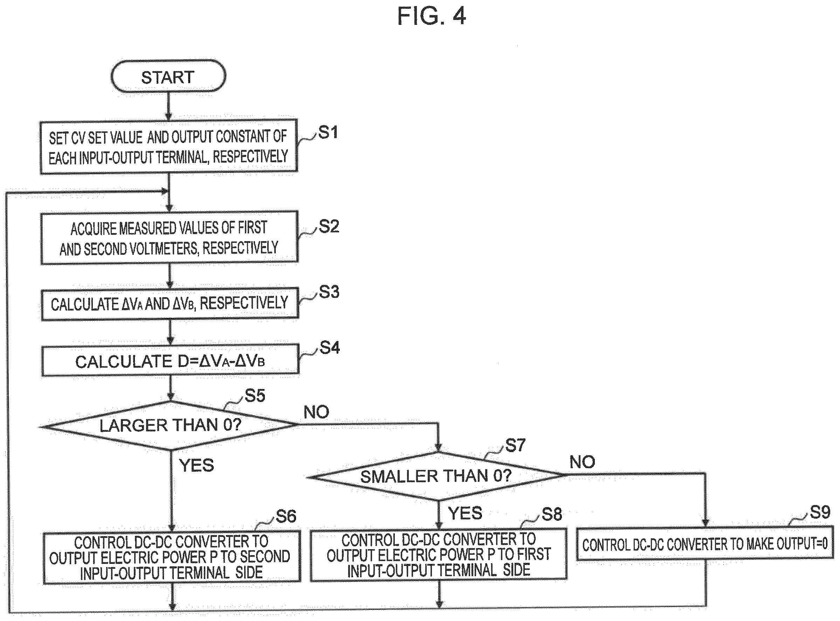

Fig. 4 illustrates a processing sequence for the above-described control processing executed by the control unit 23. Having received the above-described control command transmitted from the EMS 13, the control unit 23 starts the control processing illustrated in this Fig. 4 and firstly internally sets the respective CV set values $V_{A\_s}$, $V_{B\_s}$ of the first input-output terminal 20A side and the second input-output terminal 20B side of the DC-DC converter 20, and the electric power output constant K, which are designated by the control command, respectively as parameter values for controlling the DC-DC converter 20 (S1).

Subsequently, the control unit 23 acquires a measured value of the voltage of the first input-output terminal 20A side of the DC-DC converter 20 measured by the first voltmeter 21 (hereinafter referred to as a "first voltage measured value $V_A$") and a measured value of the voltage of the second input-output terminal 20B side of the DC-DC converter 20 measured by the second voltmeter 22 (hereinafter referred to as a "second voltage measured value $V_B$") (S2).

Then, the control unit 23 calculates the voltage difference $\Delta V_A$ between the CV set value $V_{A\_s}$ on the first input-output terminal 20A side of the DC-DC converter 20, which was internally set in step S1, and the input-side voltage measured value $V_A$, which was acquired in step S2, and the voltage difference $\Delta V_B$ between the CV set value $V_{B\_s}$ on the second input-output terminal 20B side of the DC-DC converter 20, which was internally set in step S1, and the output-side voltage measured value $V_B$, which was acquired in step S2, respectively, according to the aforementioned Formulas (2) and (3) (S3).

Next, the control unit 23: calculates the difference D, which is expressed by the following formula, between the voltage difference $\Delta V_A$ of the first input-output terminal 20A side and the voltage difference $\Delta V_B$ of the second input-output terminal 20B side, which were calculated in step S3 (S4); and judges whether the value of the calculated difference D is larger than 0 or not (S5).

[Math. 4]

$$D = \Delta V_A - \Delta V_B \qquad \cdots\cdots (4)$$

Then, if the control unit 23 obtains an affirmative result in this judgment, it conducts the PWM control of the DC-DC converter 20 so as to output electric power P of the size expressed by the aforementioned Formula (1) to the second input-output terminal 20B side (S6), and then returns to step S2. Subsequently, the control unit 23 repeatedly executes the processing in step S2 and subsequent steps.

On the other hand, if the control unit 23 obtains a negative result in the judgment of step S5, it judges whether the value of the difference $D_1$ calculated in step S4 is smaller than 0 (S7). Then, if the control unit 23 obtains an affirmative result in this judgment, it conducts the PWM control of the DC-DC converter 20 so as to output the electric power P of the size expressed by the following formula to the first input-output terminal 20A side (S8), and then returns to step S2. [Math. 5]

$$P = K \times (\Delta V_B - \Delta V_A) \qquad \cdots\cdots (5)$$

Subsequently, the control unit 23 repeatedly executes the processing in step S2 and subsequent steps.

Moreover, if the control unit 23 obtains a negative result in the judgment of step S7, it conducts the PWM control of the DC-DC converter 20 so as to not output the electric power to either the first input-output terminal 20A side or the second input-output terminal 20B side of the DC-DC converter 20 (S9), and then returns to step S2 Subsequently, the control unit 23 repeatedly executes the processing in step S2 and subsequent steps.

(1-3) Advantageous Effects of This Embodiment

With the direct-current power network system 10 according to this embodiment having the above-described configuration, the EMS 13 does not have to sequentially control the respective DC-DC converter apparatuses 12 on a real-time basis and may only have to transmit the control command, which designates the CV set values $V_{A\_s}$, $V_{B\_s}$ of the respective input-output terminals 20A, 20B for the DC-DC converter 20, and the electric power output constant K of the DC-DC converter 20, to the DC-DC converter apparatus 12 as appropriate, so that it is possible to reduce the load on the EMS 13.

Moreover, with this direct-current power network system 10, the size and direction of the output electric power of the DC-DC converter apparatus 12 can be controlled only by designating the CV set values $V_{A\_s}$, $V_{B\_s}$ and the electric power output constant K, so that it is easy to switch the size and direction of the output electric power of the DC-DC converter apparatus 12 and it is possible to facilitate the control of the DC-DC converter apparatus(es) 12 by the EMS 13.

Furthermore, regarding this direct-current power network system 10, for example, even if any fault occurs in the EMS 13 or any communication disturbance occurs between the EMS 13 and each DC-DC converter apparatus 12, each DC-DC converter apparatus 12 continues to operate in accordance with the CV set values $V_{A\_s}$, $V_{B\_s}$ and the electric power output constant K which are set by the EMS 13; and, therefore, there is no fear that, for example, a power outage attributable to any fault in the EMS 13 or any communication disturbance between the EMS 13 and each DC-DC converter apparatus 12 may occur.

Consequently, the direct-current power network system 10 of high safety which can facilitate the control can be constructed according to this embodiment.

Furthermore, with this direct-current power network system 10, the EMS 13 can control all the DC-DC converter apparatuses 12 individually within the system only by setting the CV set values $V_{A\_s}$, $V_{B\_s}$ and the electric power output constant K, respectively, for each DC-DC converter apparatus 12, so that it is also possible to easily add a DC-DC converter apparatus 12 to the system without the necessity to consider any individual differences between the DC-DC converter apparatuses 12. Moreover, since this control is executed based on differences between actual measured values and the set values, setting and maintenance of measurement equipment can be easily performed.

Furthermore, if this direct-current power network system 10 is employed, it is also possible to have the advantageous effect of automatically adjusting energy balance only by changing the CV set values $V_{A\_s}$, $V_{B\_s}$ and the electric power output constant K of the corresponding DC-DC converter apparatus 12 even when any changes in the load occur in the network and any changes in the electric power occur in association with the load changes.

(2) Second Embodiment

(2-1) Principles

Next, an explanation will be provided about a method for controlling a converter unit 30 in which first to third bidirectional DC-DC converters 31, 32, 33, each of which is capable of bidirectionally transferring the direct-current power, are coupled to each other in a T-shape.

This converter unit 30 will be discussed about a case where a voltage of an input-output terminal 30A side of the first bidirectional DC-DC converter 31 which is not connected to the second and third bidirectional DC-DC converters 32, 33 is $V_{1A}$, a voltage of an input-output terminal 32A side of the second bidirectional DC-DC converter 32 which is not connected to the first and third bidirectional DC-DC converters 31, 33 is $V_{2A}$, and a voltage of an input-output terminal 33A side of the third bidirectional DC-DC converter 33 which is not connected to the first and second bidirectional DC-DC converters 31, 32 is $V_{3A}$. Incidentally, in the following explanation, the input-output terminals 31A, 32A, 33A of these first to third bidirectional DC-DC converters 31 to 33 which are not connected to the other first to third bidirectional DC-DC converters 31 to 33 will be hereinafter referred to as external input-output terminals 31A to 33A, respectively.

Under this circumstance, it is assumed that such first to third bidirectional DC-DC converters 31 to 33 are equipped with the constant voltage function (the CV function) that keeps the output voltage constant. Moreover, it is assumed that $V_{1A\_s}$, $V_{2A\_s}$, $V_{3A\_s}$ are set respectively as target voltages (CV set values) for the CV function to the respective external input-output terminals 31A to 33A of the first to third bidirectional DC-DC converters 31 to 33 and $K_1$, $K_2$, $K_3$ are set respectively as electric power output constants of the first to third bidirectional DC-DC converters 31 to 33.

Under this circumstance, a voltage difference between the voltage value $V_{1A}$ and the CV set value $V_{1A\_s}$ of the external input-output terminal 31A side of the first bidirectional DC-DC converter 31 is defined as $\Delta V_{1A}$, a voltage difference between the voltage value $V_{2A}$ and the CV set value $V_{2A\_s}$ of the external input-output terminal 32A side of the second bidirectional DC-DC converter 32 is defined as $\Delta V_{2A}$, and a voltage difference between the voltage value $V_{3A}$ and the CV set value $V_{3A\_s}$ of the external input-output terminal 33A side of the third bidirectional DC-DC converter 33 is defined as $\Delta V_{3A}$. Moreover, regarding the first to third bidirectional DC-DC converters 31 to 33, a direction in which an electric current flows to the external input-output terminal 31A to 33A side is defined as a positive direction.

In this case, electric power $P_1$ which is output from the external input-output terminal side 31A of the first bidirectional DC-DC converter 31 can be expressed by the following formula.

[Math. 6]

$$P_1 = K_1 \times \left( \Delta V_{1A} - \frac{\Delta V_{1A} + \Delta V_{2A} + \Delta V_{3A}}{3} \right) \qquad \cdots\cdots \ (6)$$

Moreover, electric power $P_2$ which is output from the external input-output terminal 21A side of the second bidirectional DC-DC converter 32 can be expressed by the following formula.

[Math. 7]

$$P_2 = K_2 \times \left( \Delta V_{2A} - \frac{\Delta V_{1A} + \Delta V_{2A} + \Delta V_{3A}}{3} \right) \qquad \cdots\cdots \ (7)$$

Electric power $P_3$ which is output from the third bidirectional DC-DC converter 33 can be expressed by the following formula.
[Math. 8]

$$P_3 = K_3 \times \left( \Delta V_{3A} - \frac{\Delta V_{1A} + \Delta V_{2A} + \Delta V_{3A}}{3} \right) \qquad \cdots\cdots (8)$$

Incidentally, the voltage difference $\Delta V_{1A}$ in Formulas (6) to (8) is expressed by the following formula.
[Math. 9]

$$\Delta V_{1A} = V_{1A} - V_{1A\_S} \qquad \cdots\cdots (9)$$

The voltage difference $\Delta V_{2A}$ is expressed by the following formula.
[Math. 10]

$$\Delta V_{2A} = V_{2A} - V_{2A\_S} \qquad \cdots\cdots (10)$$

The voltage difference $\Delta V_{3A}$ is expressed by the following formula.
[Math. 11]

$$\Delta V_{3A} = V_{3A} - V_{3A\_S} \qquad \cdots\cdots (11)$$

As it is apparent from these Formulas (6) to (11), the bidirectional DC-DC converter unit 30 illustrated in Fig. 4 can control the sizes and the output directions of the electric power $P_1$, $P_2$, $P_3$ which is output from the respective external input-output terminals 31A of 33A of the converter unit 30, respectively, by adjusting the sizes of the CV set value $V_{1A\_s}$, $V_{2A\_s}$, $V3_{A\_s}$ which are set respectively to the external input-output terminals 31A to 33A of the first to third bidirectional DC-DC converters 31 to 33.

For example, in a state where the electric power is transferred from the external input-output terminal 31A side of the first DC-DC converter 31 to the external input-output terminal 32A side of the second DC-DC converter 32 and the external input-output terminal 33A side of the third DC-DC converter 33, the value of the electric power $P_2$ to be output to the external input-output terminal 32A side of the second DC-DC converter 32 and the value of the electric power $P_3$ to be output to the external input-output terminal 33A side of the third DC-DC converter 33 can be increased by decreasing the CV set value $V_{1A\_s}$ for the external input-output terminal 31A of the first DC-DC converter 31 or increasing the CV set value $V_{2A\_s}$ for the external input-output terminal 32A of the second DC-DC converter 32 and the CV set value $V_{3A\_s}$ for the external input-output terminal 33A of the third DC-DC converter 33.

Moreover, the DC-DC converter unit 30 can be made to operate so as to output the electric power $P_1$ from the external input-output terminal 31A side of the first DC-DC converter 31 by setting the values of the CV set values $V_{1A\_s}$ to $V3_{A\_s}$ for the external input-output terminals 31A to 33A of the first to third DC-DC converters 31 to 33 so that the voltage difference $\Delta V_{1A}$ on the external input-output terminal 31A side of the first DC-DC converter 31 becomes larger than an average value of the respective voltage differences $\Delta V_{1A}$ to $\Delta V_{3A}$ at the external input-output terminal 31A to 33A sides of the first to third DC-DC converters 31 to 33.

(2-2) Configuration of DC-DC Converter System According to Second Embodiment

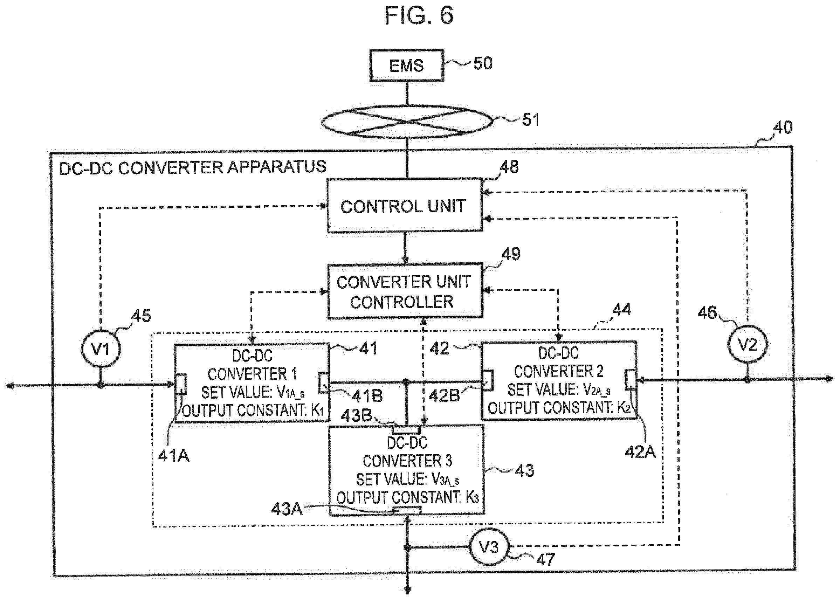

Fig. 6 illustrates a DC-DC converter apparatus 40 according to the second embodiment which can be applied, instead of the DC-DC converter apparatus 12 according to the aforementioned first embodiment with reference to Fig. 3, to the direct-current power network system 10 in Fig. 2. This DC-DC converter apparatus 40 is configured by including a converter unit 44, which is composed of first to third DC-DC converters 41, 42, 43, first to third voltmeters 45, 46, 47, a control unit 48, and a converter unit controller 49.

Each of the first to third DC-DC converters 41 to 43 is a bidirectional DC-DC converter equipped with a CV/CC function (constant voltage / constant current control function). Each of the first to third DC-DC converters 41 to 43 under the control of the converter unit controller 49: increases or decreases the voltage of the direct-current power on the external input-output terminal 41A, 42A, 43A side, which is one input-output terminal, and thereby transfers the direct-current power to the other input-output terminal 41B, 42B, 43B side; or increases or decreases the voltage of the direct-current power on the other input-output terminal 41B to 43B side and thereby transfers the direct-current power to the external input terminal 41A to 43A side.

The first voltmeter 45 is a general-purpose voltmeter connected to the external input-output terminal 41A side of the first DC-DC converter 41 and measures a voltage of the external input-output terminal 41A side of the first DC-DC converter 41 and outputs a measurement result to the control unit 48. Moreover, the second voltmeter 46 is a general-purpose voltmeter connected to the external input-output terminal 42A side of the second DC-DC converter 42 and measures a voltage of the external input-output terminal 42A side of the second DC-DC converter 42 and outputs a measurement result to the control unit 48. Similarly, the third voltmeter 47 is a general-purpose voltmeter connected to the external input-output terminal 43A side of the third DC-DC converter 43 and measures a voltage of the external input-output terminal 43A side of the third DC-DC converter 43 and outputs a measurement result to the control unit 48.

The control unit 48 is a control apparatus for controlling the first to third DC-DC converters 41 to 43 via the converter unit controller 49 according to the measurement results of the first to third voltmeters 45 to 47 and a control command given, via a network 51, from an EMS 50 which manages all the DC-DC converter apparatuses within the direct-current power network system, in an integrated manner, where this DC-DC converter apparatus 40 exists.

Practically, in the case of this embodiment, the EMS 50 transmits the control command, which designates CV set values $V_{1A\_s}$, $V_{2A\_s}$, $V_{3A\_s}$ for the external input terminals 41A to 43A of the first to third DC-DC converters 41 to 43 and electric power output constants $K_1$, $K_2$, $K_3$ of the first to third DC-DC converters 41 to 43, respectively, to the control unit 48 as appropriate.

Then, the control unit 48 which has received this control command internally sets the respective CV set values $V_{1A\_s}$ to $V_{3A\_s}$ of the external input terminals 41A to 43A of the first to third DC-DC converters 41 to 43, which are control targets, and the electric power output constants $K_1$ to $K_3$ of the first to third DC-DC converters 41 to 43 to the values designated by the control command.

Moreover, the control unit 48 calculates the values of the electric power $P_1$ to $P_3$ to be output from the respective external input-output terminal sides 41A to 43A of the first to third bidirectional DC-DC converters 41 to 43 on the basis of these above-mentioned values according to Formulas (6) to (8) and transmits calculation results of these values of the electric power $P_1$ to $P_3$ to the converter unit controller 49, respectively.

Moreover, the converter unit controller 49 conducts the PWM control of the first to third DC-DC converters 41 to 43 so that the electric power $P_1$ to $P_3$ of the sizes respectively designated by the control unit 48 is output from the respective external input-output terminal sides 41A to 43A of the first to third DC-DC converters 41 to 43 as given from the control unit 48.

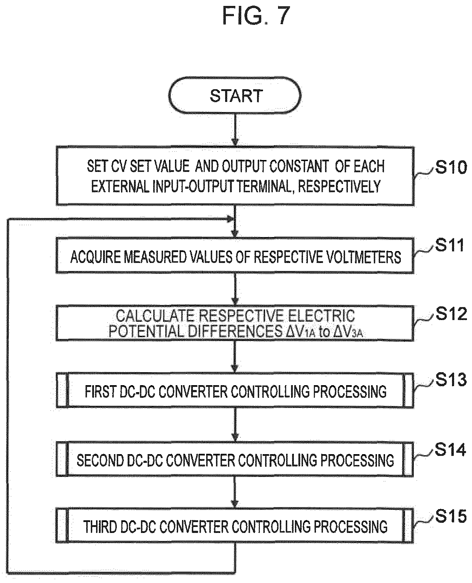

Fig. 7 illustrates a processing sequence for the above-described control processing executed by the control unit 48. This control processing is started when the control unit 48 receives the aforementioned control command transmitted from the EMS 50. Then, the control unit 48 firstly internally sets the CV set values $V_{1A\_s}$ to $V_{3A\_s}$ for the respective external input-output terminals 41A to 43A of the first to third DC-DC converters 41 to 43 and the electric power output constants $K_1$ to $K_3$ of these first to third DC-DC converters 41 to 43, which are designated by the control command, as parameter values when controlling the converter unit 44 (S10).

Subsequently, the control unit 48 acquires a measured value of the voltage of the external input-output terminal 41A side of the first DC-DC converter 41 measured by the first voltmeter 45 (hereinafter referred to as a "first voltage measured value $V_{1A}$"), a measured value of the voltage of the external input-output terminal 42A side of the second DC-DC converter 42 measured by the second voltmeter 46 (hereinafter referred to as a "second voltage measured value $V_{2A}$"), and a measured value of the voltage of the external input-output terminal 43A side of the third DC-DC converter 43 measured by the third voltmeter 47 (hereinafter referred to as a "third voltage measured value $V_{3A}$"), respectively (S11).

Then, the control unit 48 calculates the voltage difference $\Delta V_{1A}$ between the CV set value $V_{1A\_s}$ for the external input-output terminal 41A side of the first DC-DC converter 41, which was internally set in step S10, and the first voltage measured value $V_{1A}$ acquired in step S11, the voltage difference $\Delta V_{2A}$ between the CV set value $V_{2A\_s}$ for the external input-output terminal 42A side of the second DC-DC converter 42, which was internally set in step S10, and the second voltage measured value $V_{2B}$ acquired in step S11, and the voltage difference $\Delta V_{3A}$ between the CV set value $V_{3A\_s}$ for the external input-output terminal 43A side of the third DC-DC converter 43, which was internally set in step S10, and the third voltage measured value $V_{3B}$ acquired in step S11, respectively, according to the aforementioned Formulas (9) to (11) (S12).

Next, the control unit 48 calculates the value of the electric power $P_1$ to be output from the external input-output terminal 41A of the first DC-DC converter 41 on the basis of the electric power output constant $K_1$ for the first DC-DC converter 41, which was internally set in step S10, and the voltage difference $\Delta V_{1A}$ acquired in step S12 and outputs the calculation result to the converter unit controller 49, thereby controlling the actions of the first DC-DC converter 41 via the relevant converter unit controller 49 (S13).

Moreover, the control unit 48 calculates the value of the electric power $P_2$ to be output from the external input-output terminal 42A of the second DC-DC converter 42 on the basis of the electric power output constant $K_2$ for the second DC-DC converter 42, which was internally set in step S10, and the voltage difference $\Delta V_{2A}$ acquired in step S12 and outputs the calculation result to the converter unit controller 49, thereby controlling the actions of the second DC-DC converter 42 via the relevant converter unit controller 49 (S14).

Furthermore, the control unit 48 calculates the value of the electric power $P_3$ to be output from the external input-output terminal 43A of the third DC-DC converter 43 on the basis of the electric power output constant $K_3$ for the third DC-DC converter 43, which was internally set in step S10, and the voltage difference $\Delta V_{3A}$ acquired in step S12 and outputs the calculation result to the converter unit controller 49, thereby controlling the actions of the third DC-DC converter 43 via the relevant converter unit controller 49 (S15).

Then, after the completion of the processing in step S15, the control unit 48 returns to step S11 and repeatedly executes the processing from step S11 to step S15 in the same manner as described above.

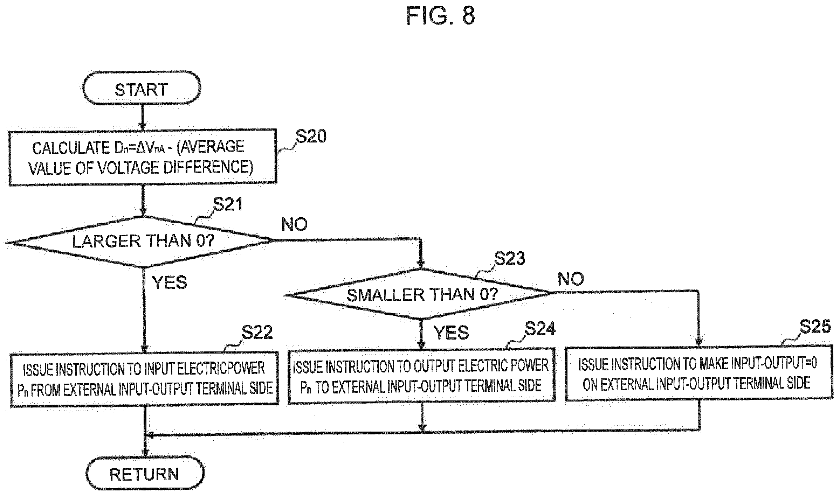

Incidentally, Fig. 8 illustrates specific processing content of the control unit 48 in each step from step S13 to step S15. When the control unit 48 proceeds to step S13, step S14, or step S15 in Fig. 7, it starts the control processing illustrated in this Fig. 8 and firstly calculates the difference $D_n$ between the voltage difference $\Delta V_{nA}(n=1, 2, 3)$, which was calculated in step S12 in Fig. 7, of the first to third DC-DC converter 41 to 43, which is then the control target, and an average value of these the voltage differences $\Delta V_{1A}$ to $\Delta V_{3A}$ according to the following formula (S20).
[Math. 12]

$$D_n = \Delta V_{nA} - \frac{\Delta V_{1A} + \Delta V_{2A} + \Delta V_{3A}}{3} \qquad \cdots\cdots (1\,2)$$

Subsequently, the control unit 48 judges whether the value of the difference $D_n$ calculated in step S20 is larger than 0 or not (S21). Then, if the control unit 48 obtains an affirmative result in this judgment, the control unit 48: issues an instruction to the converter unit controller 49 to input the electric power $P_n(n=1, 2, 3)$ of the size, which is expressed by Formula (6) if the then control target is the first DC-DC converter 41, by Formula (7) if the control target is the second DC-DC converter 42, or by Formula (8) if the control target is the third DC-DC converter 43, from the external input-output terminal 41A to 43A side of that first to third DC-DC converter 41 to 43 (S22); and then terminates the processing in this Fig. 8 and returns to the control processing in Fig. 7. Consequently, when this occurs, the converter unit controller 49 conducts the PWM control of the relevant first to third DC-DC converter 41 to 43 to input the designated electric power $P_n$ from the external input terminal 41A to 43A of the first to third DC-DC converter 41 to 43 side which is the then control target.

On the other hand, if the control unit 48 obtains a negative result in the judgment of step S21, it judges whether the value of the difference $D_n$ calculated in step S20 is smaller than 0 or not (S23). Then, if the control unit 48 obtains an affirmative result in this judgment, the control unit 48: issues an instruction to the converter unit controller 49 to output the electric power Pn(n=1, 2, 3) of the size, which is expressed by Formula (6) if the then control target is the first DC-DC converter 41, by Formula (7) if the control target is the second DC-DC converter 42, or by Formula (8) if the control target is the third DC-DC converter 43, from the external input-output terminal 41A to 43A side of that first to third DC-DC converter 41 to 43 (S24); and then terminates the processing in this Fig. 8 and returns to the control processing in Fig. 7. Consequently, when this occurs, the converter unit controller 49 conducts the PWM control of the relevant first to third DC-DC converter 41 to 43 to output the designated electric power $P_n$ to the external input terminal 41A to 43A of the first to third DC-DC converter 41 to 43 side which is the then control target.

On the other hand, if the control unit 48 obtains a negative result in the judgment of step S23, the control unit 48: issues an instruction to the converter unit controller 49 to stop inputting/outputting the electric power from the external input-output terminal 41A to 43A of the first to third DC-DC converter 41 to 43 which is the then control target (S25); and then terminates the processing in this Fig. 8 and returns to the control processing in Fig. 7. Consequently, when this occurs, the converter unit controller 49 controls the relevant first to third DC-DC converter 41 to 43 to not input/output the electric power from the external input terminal 41A to 43A of the first to third DC-DC converter 41 to 43 which is the then control target.

(2-3) Advantageous Effects of This Embodiment

If the DC-DC converter apparatus 40 according to this embodiment described above is employed, even if the DC-DC converter unit 44 is configured of the plurality of the DC-DC converters 41 to 43, the entire DC-DC converter apparatus 40 can be controlled by controlling the individual DC-DC converters 41 to 43 in the same manner as in the first embodiment, thereby making it possible to obtain advantageous effects similar to those of the first embodiment.

(3) Other Embodiments

Incidentally, the aforementioned first and second embodiments have described the case where the DC-DC converters 20, 41 to 43 are bidirectional DC-DC converters; however, the present invention is not limited to this example and the present invention can be also applied to a case where the DC-DC converters 20, 41 to 43 are DC-DC converters capable of transferring the electric power only unidirectionally by increasing or decreasing the voltage.

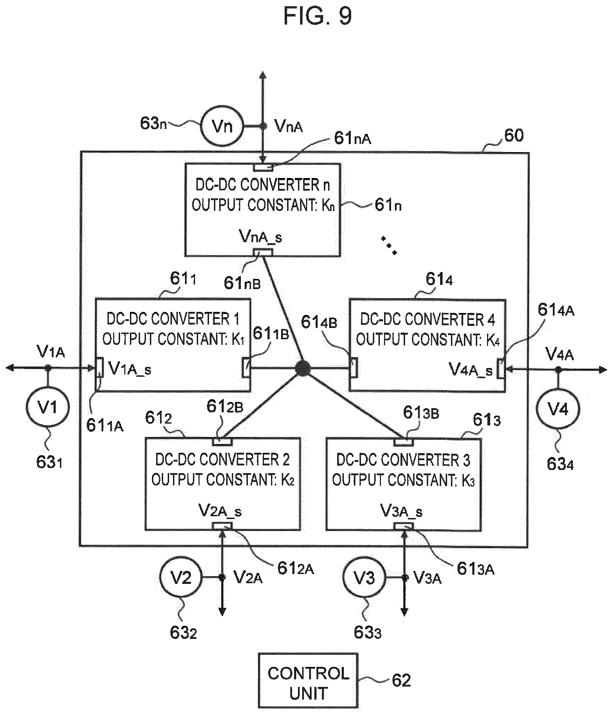

Moreover, the aforementioned second embodiment has described the case where the DC-DC converter unit 44 is configured of three DC-DC converters 41 to 43; however, the present invention is not limited to this example and a DC-DC converter unit 60 may be configured of a plurality of DC-DC converters $61_1$, $61_2$, and up to $61_n$ such that their one-side input-output terminals $61_1$B, $61_2$B, and up to $61_n$B are connected to each other as illustrated in Fig. 9.

In this case, the EMS 13 may transmit a control command, which designates CV set values $V_{1\_s}$, $V_{2\_s}$, and up to Vn_s for the external input-output terminals (input-output terminal $61_1$A, $61_2$A, and up to $61_n$A sides which are not connected to the other DC-DC converters $61_1$ to $61_n$) of the respective DC-DC converters $61_1$ to $61_n$ constituting input-output terminals of the DC-DC converter unit 60 of the relevant DC-DC converter apparatus, and electric power output constants $K_1$, $K_2$, and up to $K_n$ of these DC-DC converters $61_1$ to $61_n$, to each DC-DC converter apparatus as appropriate.

Moreover, a control unit 62 for the DC-DC converter apparatus may control the respective DC-DC converters $61_1$ to $61_n$ which constitute the DC-DC converter unit 60 as described below in accordance with this control command.

Specifically speaking, regarding the external input-output terminals $61_1$A to $61_n$A of the respective DC-DC converters $61_1$ to $61_n$ (the input-output terminals of the DC-DC converter unit 60) which constitute the DC-DC converter unit 60, the control unit 62 firstly calculates a voltage difference $\Delta V_k$(k=1, 2, and up to n) between a voltage value $V_{1A}$, $V_{2A}$, and up to $V_{nA}$ measured by a voltmeter $63_1$, $63_2$, and up to $63_n$ connected to the relevant external input-output terminal $61_1$A to $61_n$A and the CV set value $V_{1\_s}$ to Vn_s for that external input-output terminal $61_1$A to $61_n$A according to the following formula.

[Math. 13]

$$\Delta V_k = V_{kA} - V_{kA\_s} \qquad \cdots\cdots (1\ 3)$$

Moreover, the control unit 62 calculates each electric power $P_k$(k=1, 2, and up to n) to be input/output to each external input-output terminal $61_1$A to $61_n$A of these DC-DC converters $61_1$ to $61_n$ according to the following formula.

[Math. 14]

$$P_k = K_k \times \left( \Delta V_{kA} - \frac{\Delta V_{1A} + \Delta V_{2A} + \cdots + \Delta V_{nA}}{n} \right) \qquad \cdots\cdots (1\ 4)$$

Incidentally, the second term in parentheses on the right side of Formula (14) is an average value of the voltage differences $\Delta V_{1A}$, $\Delta V_{2A}$, and so on up to $\Delta V_{NA}$ of the respective DC-DC converters $61_1$ to $61_n$ which constitute the DC-DC converter unit 60.

Then, if the calculated electric power $P_k$ is larger than 0, the control unit 62 inputs the electric power $P_k$, which is given according to Formula (14), from the external input-output terminal $61_1$A to $61_n$A of the corresponding DC-DC converter $61_1$ to $61_n$; if the calculated electric power $P_k$ is smaller than 0, the control unit 62 outputs the electric power $P_k$, which is given according to Formula (14), from the relevant external input-output terminal $61_1$A to $61_n$A; and if the calculated electric power $P_k$ is 0, the control unit 62 controls each DC-DC converter $61_1$ to $61_n$ to stop inputting/outputting the electric power from the external input-output terminal $61_1$A to $61_n$A.

As a result, even if the DC-DC converter unit 60 is configured of four or more DC-DC converters $61_1$ to $61_n$, the DC-DC converter apparatus can be controlled in the same manner as in the second embodiment.

INDUSTRIAL AVAILABILITY

The present invention can be applied to a direct-current power network equipped with a plurality of DC-DC converter apparatuses.

REFERENCE SIGNS LIST

1, 20, 31 to 33, 41 to 43, and $61_1$ to $61_n$: DC-DC converters
1A, 1B, 20A, 20B, 31A, 32A, 33A, 41A, 41B, 42A, 42B, 43A, 43B: input-output terminals
10: direct-current power network system
12, 40: DC-DC converter apparatus
13, 50: EMS
21, 22, 45 to 47, and $63_1$ to $63_n$: voltmeters
23, 48, 62: control unit
24, 44, 60: converter unit
49: converter unit controller
$V_A$, $V_B$, and $V_{1A}$ to $Vn_A$: voltage values
$V_{A\_s}$, $V_{B\_s}$, and $V_{1A\_s}$ to $V_{nA\_s}$: CV set values
$K$, $K_1$ to $K_n$: electric power output constants

**Claims**

1. A direct-current power network system including one or a plurality of DC-DC converter apparatuses provided in a network and a centralized management apparatus for centrally managing each of the DC-DC converter apparatuses in the network, wherein the DC-DC converter apparatus includes:

   a converter unit that is composed of one DC-DC converter capable of transferring direct-current power bidirectionally or a plurality of DC-DC converters having the same function as that of the DC-DC converter with their one-side input-output terminals coupled to each other;
   a voltmeter that measures a voltage of each input-output terminal of the converter unit: and
   a control unit that controls each of the DC-DC converters which constitute the converter unit so that electric power with a constant voltage is input and output from each input-output terminal of the converter unit,
   wherein the centralized management apparatus designates, for each DC-DC converter apparatus, a target voltage of each input-output terminal of the converter unit for the DC-DC converter apparatus; and
   wherein the control unit for the DC-DC converter apparatus:

   calculates a voltage difference between the target voltage of the input-output terminal designated by the centralized management apparatus and a voltage of the input-output terminal measured by the voltmeter with respect to each input-output terminal of the converter unit; and
   controls a size and direction of output electric power of each DC-DC converter on the basis of the calculated voltage difference of each input-output terminal of the converter unit.

2. The direct-current power network system according to claim 1,
   wherein when the converter unit is configured of the one DC-DC converter, the control unit for the DC-DC converter apparatus controls the DC-DC converter so that electric power according to a difference between the voltage difference at one of the input-output terminals and the voltage difference at another one of the input-output terminals of the converter unit is transferred from the one input-output terminal to the other input-output terminal; and when the converter unit is configured of the plurality of the DC-DC converters, the control unit for the DC-DC converter apparatus controls the corresponding DC-DC converter, with respect to each input-output terminal of the converter unit, so that electric power according to a difference between the voltage difference of the relevant input-output terminal and an average value of the voltage differences of the respective input-output terminals of the converter unit is input and output from the relevant input-output terminal.

3. The direct-current power network system according to claim 2,

   wherein the centralized management apparatus designates, for each DC-DC converter apparatus, an electric power output constant of each of the DC-DC converters, which constitute the converter unit, in addition to the target voltage of each input-output terminal of the converter unit for the DC-DC converter apparatus; and
   wherein when the converter unit is configured of the one DC-DC converter, the control unit for the DC-DC converter apparatus controls the DC-DC converter so that the electric power of a size obtained by multiplying the difference between the voltage differences of the respective input-output terminals of the converter unit by the electric power output constant of the corresponding DC-DC converter is transferred from the one input-output terminal to the other input-output terminal.

4. The direct-current power network system according to claim 2,

   wherein the centralized management apparatus designates, for each DC-DC converter apparatus, an electric power output constant of each of the DC-DC converters, which constitute the converter unit, in addition to the target voltage of each input-output terminal of the converter unit for the DC-DC converter apparatus; and wherein when the converter unit is configured of the plurality of the DC-DC converters, the control unit for the DC-DC converter apparatus controls the DC-DC converters, with respect to each input-output terminal of the converter unit, so that the electric power of a size obtained by multiplying the difference between the voltage difference of the relevant input-output terminal and the average value of the voltage differences of the respective input-output terminals of the converter unit by the electric power output constant of the corresponding DC-DC converter is input and output from the relevant input-output terminal.

5. A DC-DC converter apparatus comprising:

   a converter unit that is composed of one DC-DC converter capable of transferring direct-current power bidirectionally or a plurality of DC-DC converters having the same function as that of the DC-DC converter with their one-side input-output terminals coupled to each other; a voltmeter that measures a voltage of each input-output terminal of the converter unit: and
   a control unit that controls each of the DC-DC converters which constitute the converter unit so that electric power with a constant voltage is input and output from each input-output terminal of the converter unit, wherein the control unit:
   calculates a voltage difference between a target voltage of the input-output terminal designated by a host apparatus and a voltage of the input-output terminal measured by the voltmeter with respect to each input-output terminal of the converter unit; and controls a size and direction of output electric power of each DC-DC converter on the basis of the calculated voltage difference of each input-output terminal of the converter unit.

6. The DC-DC converter apparatus according to claim 5,
   wherein when the converter unit is configured of the one DC-DC converter, the control unit controls the DC-DC converter so that electric power according to a difference between the voltage difference at one of the input-output terminals and the voltage difference at another one of the input-output terminals of the converter unit is transferred from the one input-output terminal to the other input-output terminal; and when the converter unit is configured of the plurality of the DC-DC converters, the control unit controls the corresponding DC-DC converter, with respect to each input-output terminal of the converter unit, so that electric power according to a difference between the voltage difference of the relevant input-output terminal and an average value of the voltage differences of the respective input-output terminals of the converter unit is input and output from the relevant input-output terminal.

7. The DC-DC converter apparatus according to claim 6,

   wherein the host apparatus designates, for each DC-DC converter apparatus, an electric power output constant of each of the DC-DC converters, which constitute the converter unit, in addition to the target voltage of each input-output terminal of the converter unit for the DC-DC converter apparatus; and wherein when the converter unit is configured of the one DC-DC converter, the control unit controls the DC-DC converter so that the electric power of a size obtained by multiplying the difference between the voltage differences of the respective input-output terminals of the converter unit by the electric power output constant of the corresponding DC-DC converter is transferred from the one input-output terminal to the other input-output terminal.

8. The DC-DC converter apparatus according to claim 6,

   wherein the host apparatus designates, for each DC-DC converter apparatus, an electric power output constant of each of the DC-DC converters, which constitute the converter unit, in addition to the target voltage of each input-output terminal of the converter unit for the DC-DC converter apparatus; and wherein when the converter unit is configured of the plurality of the DC-DC converters, the control unit controls the DC-DC converters, with respect to each input-output terminal of the converter unit, so that the electric power of a size obtained by multiplying the difference between the voltage difference of the relevant input-output terminal and the average value of the voltage differences of the respective input-output terminals of the converter unit by the electric power output constant of the corresponding DC-DC converter is input and output from the relevant input-output terminal.

9. A DC-DC converter apparatus controlling method for a direct-current power network system including one or a plurality of DC-DC converter apparatuses provided in a network and a centralized management apparatus for centrally managing each of the DC-DC converter apparatuses in the network, wherein the DC-DC converter apparatus includes:

a converter unit that is composed of one DC-DC converter capable of transferring direct-current power bidirectionally or a plurality of DC-DC converters having the same function as that of the DC-DC converter with their one-side input-output terminals coupled to each other;
a voltmeter that measures a voltage of each input-output terminal of the converter unit: and
a control unit that controls each of the DC-DC converters which constitute the converter unit so that electric power with a constant voltage is input and output from each input-output terminal of the converter unit,
the DC-DC converter apparatus controlling method comprising:

a first step executed by the centralized management apparatus designates, for each DC-DC converter apparatus, a target voltage of each input-output terminal of the converter unit for the DC-DC converter apparatus; and
a second step executed by the control unit for the DC-DC converter apparatus calculating a voltage difference between the target voltage of the input-output terminal designated by the centralized management apparatus and a voltage of the input-output terminal measured by the voltmeter with respect to each input-output terminal of the converter unit and controlling a size and direction of output electric power of each DC-DC converter on the basis of the calculated voltage difference of each input-output terminal of the converter unit.

10. The DC-DC converter apparatus controlling method according to claim 9,
wherein in the second step, when the converter unit is configured of the one DC-DC converter, the control unit controls the DC-DC converter so that electric power according to a difference between the voltage difference at one of the input-output terminals and the voltage difference at another one of the input-output terminals of the converter unit is transferred from the one input-output terminal to the other input-output terminal; and when the converter unit is configured of the plurality of the DC-DC converters, the control unit controls the corresponding DC-DC converter, with respect to each input-output terminal of the converter unit, so that electric power according to a difference between the voltage difference of the relevant input-output terminal and an average value of the voltage differences of the respective input-output terminals of the converter unit is input and output from the relevant input-output terminal.

11. The DC-DC converter apparatus controlling method according to claim 10,
wherein in the first step, the centralized management apparatus designates, for each DC-DC converter apparatus, an electric power output constant of each of the DC-DC converters, which constitute the converter unit, in addition to the target voltage of each input-output terminal of the converter unit for the DC-DC converter apparatus; and
wherein in the second step, when the converter unit is configured of the one DC-DC converter, the control unit controls the DC-DC converter so that the electric power of a size obtained by multiplying the difference between the voltage differences of the respective input-output terminals of the converter unit by the electric power output constant of the corresponding DC-DC converter is transferred from the one input-output terminal to the other input-output terminal.

12. The DC-DC converter apparatus controlling method according to claim 11,

wherein in the first step, the centralized management apparatus designates, for each DC-DC converter apparatus, an electric power output constant of each of the DC-DC converters, which constitute the converter unit, in addition to the target voltage of each input-output terminal of the converter unit for the DC-DC converter apparatus; and
wherein in the second step, when the converter unit is configured of the plurality of the DC-DC converters, the control unit controls the DC-DC converters, with respect to each input-output terminal of the converter unit, so that the electric power of a size obtained by multiplying the difference between the voltage difference of the relevant input-output terminal and the average value of the voltage differences of the respective input-output terminals of the converter unit by the electric power output constant of the corresponding DC-DC converter is input and output from the relevant input-output terminal.

## FIG. 1

DC-DC CONVERTER

PROPORTIONALITY
CONSTANT K

$V_A$

$V_{A\_s}$

1A

$V_{B\_s}$

$V_B$

1B

FIG. 2

FIG. 3

FIG. 4

START

SET CV SET VALUE AND OUTPUT CONSTANT OF EACH INPUT-OUTPUT TERMINAL, RESPECTIVELY — S1

ACQUIRE MEASURED VALUES OF FIRST AND SECOND VOLTMETERS, RESPECTIVELY — S2

CALCULATE $\Delta V_A$ AND $\Delta V_B$, RESPECTIVELY — S3

CALCULATE $D = \Delta V_A - \Delta V_B$ — S4

LARGER THAN 0? — S5

NO

YES

SMALLER THAN 0? — S7

NO

YES

CONTROL DC-DC CONVERTER TO OUTPUT ELECTRIC POWER P TO SECOND INPUT-OUTPUT TERMINAL SIDE — S6

CONTROL DC-DC CONVERTER TO OUTPUT ELECTRIC POWER P TO FIRST INPUT-OUTPUT TERMINAL SIDE — S8

CONTROL DC-DC CONVERTER TO MAKE OUTPUT=0 — S9

EP 3 930 131 A1

FIG. 5

# FIG. 6

EMS ~50

~51

DC-DC CONVERTER APPARATUS ~40

~48

CONTROL UNIT

~49

CONVERTER UNIT CONTROLLER

~44

V1 ~45

V2 ~46

DC-DC CONVERTER 1 ~41
SET VALUE: $V_{1A\_s}$
OUTPUT CONSTANT: $K_1$

41B

42

DC-DC CONVERTER 2 ~42
SET VALUE: $V_{2A\_s}$
OUTPUT CONSTANT: $K_2$

42B

43B

41A

42A

DC-DC CONVERTER 3
SET VALUE: $V_{3A\_s}$
OUTPUT CONSTANT: $K_3$ ~43

43A

V3 ~47

## FIG. 7

START

SET CV SET VALUE AND OUTPUT CONSTANT OF EACH
EXTERNAL INPUT-OUTPUT TERMINAL, RESPECTIVELY — S10

ACQUIRE MEASURED VALUES OF RESPECTIVE VOLTMETERS — S11

CALCULATE RESPECTIVE ELECTRIC
POTENTIAL DIFFERENCES $\Delta V_{1A}$ to $\Delta V_{3A}$ — S12

FIRST DC-DC CONVERTER CONTROLLING PROCESSING — S13

SECOND DC-DC CONVERTER CONTROLLING PROCESSING — S14

THIRD DC-DC CONVERTER CONTROLLING PROCESSING — S15

# FIG. 8

START

↓

CALCULATE $D_n = \Delta V_{nA}$ - (AVERAGE VALUE OF VOLTAGE DIFFERENCE) — S20

↓

LARGER THAN 0? — S21

— NO →

— YES ↓

ISSUE INSTRUCTION TO INPUT ELECTRICPOWER $P_n$ FROM EXTERNAL INPUT-OUTPUT TERMINAL SIDE — S22

SMALLER THAN 0? — S23

— NO →

— YES ↓

ISSUE INSTRUCTION TO OUTPUT ELECTRIC POWER $P_n$ TO EXTERNAL INPUT-OUTPUT TERMINAL SIDE — S24

ISSUE INSTRUCTION TO MAKE INPUT-OUTPUT=0 ON EXTERNAL INPUT-OUTPUT TERMINAL SIDE — S25

RETURN

EP 3 930 131 A1

# FIG. 9

## INTERNATIONAL SEARCH REPORT

| International application No. |
| --- |
| PCT/JP2019/006924 |

### A. CLASSIFICATION OF SUBJECT MATTER
Int. Cl. H02J1/00(2006.01)i, H02J13/00(2006.01)i, H02M3/00(2006.01)i, H02M3/155(2006.01)i

According to International Patent Classification (IPC) or to both national classification and IPC

### B. FIELDS SEARCHED

Minimum documentation searched (classification system followed by classification symbols)
Int. Cl. H02J1/00, H02J13/00, H02M3/00, H02M3/155

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-018263 A (NIPPON TELEGRAPH AND TELEPHONE CORPORATION) 01 February 2016, paragraphs [0012]-[0070], fig. 1-9 (Family: none) | 1-12 |
| A | JP 2011-147232 A (SANSHA ELECTRIC MFG CO., LTD.) 28 July 2011, paragraphs [0019]-[0022], fig. 1 (Family: none) | 1-12 |
| A | JP 2009-148116 A (TOYOTA JIDOSHA KABUSHIKI KAISHA) 02 July 2009, paragraphs [0038], [0039], fig. 1 (Family: none) | 1-12 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11.04.2019 | 23.04.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 930 131 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017130991 A